# EUROPÄISCHE PATENTANMELDUNG

(11) **EP 1 739 368 A1**
(43) Veröffentlichungstag der Anmeldung: **03.01.2007**
(21) Anmeldenummer: 05014007.8
(22) Anmeldetag: 29.06.2005
(51) Int. Cl.: F24J 2/05, F24J 2/46

(54) **Solaranlage**

(71) Anmelder: Ismail, Hossein, 85395 Attenkirchen (DE)
(72) Erfinder: Ismail, Hossein, 85395 Attenkirchen (DE)
(74) Vertreter: Feldkamp, Rainer

(57) **Zusammenfassung**

Bei einer Solaranlage mit einem langgestreckten konkaven Sonnenreflektor (1), weist die Solaranlage ein Glasrohr (2) und ein darin angeordnetes Metallrohr (3), das ein Wärmeträgermedium enthält, auf. Die Solaranlage ist modular aufgebaut. Hierbei bestehen sowohl das Glasrohr (2) als auch das Metallrohr (3) aus jeweiligen in Längsrichtung hintereinander angeordneten Abschnitten. Diese Abschnitte sind zwischen zwei Endstücken (5,6) angeordnet. Zwischen den Endstücken (5,6) sind Spannstäbe (8) angebracht, um die Rohre zu versteifen.

## Beschreibung

Die Erfindung bezieht sich auf eine Solaranlage der im Oberbegriff des Anspruchs 1 genannten Art.

Solaranlagen sind in vielfältiger Art bekannt und werden zu unterschiedlichen Zwecken verwendet. Beispielsweise ist aus der CH 672 368 eine Solaranlage bekannt, bei der bei Sonnenschein ein Wärmespeicher aufgeladen wird, aus dem Energie zur Speisung eines Stirlingmotors entnommen werden kann. Auf diese Weise kann der Wärmespeicher auch bei fehlender Sonneneinstrahlung weiter Energie an den Stirlingmotor liefern.

Die Verwendung einer Solaranlage zur Meerwasserentsalzung ist beispielsweise aus der DE 33 32 499 A1 bekannt. Bei dieser Anlage erfolgt die Verdunstung und Kondensation innerhalb eines Gewächshauses. Das Wasser wird in offenen Behältern verdunstet und die Kondensation findet im Bereich einer Kühlanlage statt. Die Abwärme der zur Kondensation verwendeten Kühlanlage wird einem Verdunster zugeführt.

Für derartige Solaranlagen werden unterschiedlichste Arten von Sonnenkollektoren verwendet. Derartige Sonnenkollektoren können flächig oder rohrförmig ausgebildet sein.

Ein spezieller Sonnenkollektor ist aus der DE 30 45 605 bekannt. Bei einem Sonnenkollektor dieser Art werden die Sonnenstrahlen durch ein evakuiertes Glasrohr auf ein Absorberrohr, das sich innerhalb des Glasrohres befindet, gelenkt. Im Inneren des Absorberrohres befindet sich eine Flüssigkeit, die durch die Wärme der Sonnenstrahlen erwärmt wird. Das Absorberrohr führt in das Glasrohr hinein, wird am Ende umgebogen und führt wieder hinaus. Das Glasrohr ist nur auf einer Seite offen und wird dort mit einer Dichtung abgeschlossen. Hierbei ist es notwendig, dass das Glasrohr evakuiert wird. Dazu ist ein zusätzlicher Absaugstutzen vorgesehen, der nach der Evakuierung abgeschmolzen wird.

Der mechanische Aufbau derartiger Solaranlagen ist sehr unterschiedlich und zumeist auf den speziellen Anwendungszweck zugeschnitten. Hierdurch entstehen hohe Konstruktions- und Planungskosten.

Der Erfindung liegt die Aufgabe zugrunde, eine Solaranlage zu schaffen, die bei einfachem Aufbau eine vielseitige Anwendung ermöglicht. Diese Aufgabe wird durch die im kennzeichnenden Teil des Anspruchs 1 angegebenen Merkmale gelöst.

Es wird eine Solaranlage geschaffen, die einen langgestreckten konkaven Sonnenreflektor aufweist, an dessen Brennlinie sich ein in einem Glasrohr angeordnetes Metallrohr befindet. Sonnenstrahlen werden an diesem Sonnenreflektor reflektiert und auf das Glasrohr gelenkt und ein Wärmeträgermedium, das sich in dem Metallrohr befindet, dadurch erwärmt.

Sowohl das Glasrohr als auch das Metallrohr können aus mehreren Abschnitten bestehen, die zwischen zwei Endstücken angeordnet sind. Die Endstücke können entsprechend einer Vielzahl von Anwendungsmöglichkeiten ausgestaltet und angepasst werden. Die Längsachsen des Metallrohres bzw. des Reflektors können sowohl horizontal als auch vertikal oder in einem anderen Winkel angeordnet werden.

Mit diesem modularen System können verschiedene Anwendungen ausgeführt werden, beispielsweise Wasserentsalzung und Verwendung mit einem Stirlingmotor.

Bei der Wasserentsalzung sind das Glasrohr und das darin angeordnete Metallrohr horizontal gelagert. In einen Einlass eines ersten Kreislaufs eines Wärmetauschers mit zwei Kreisläufen wird Salzwasser geleitet. Dieses Salzwasser wird von einem Auslass des ersten Kreislaufs in das eine Endstück und dann in das Metallrohr eingeleitet und innerhalb des Metallrohres durch Sonneneinstrahlung erhitzt. Das verdampfte Wasser wird in einen Einlass des zweiten Kreislaufs des Wärmetauschers geleitet. Der Dampf kondensiert und aus einem Auslass des zweiten Kreislaufs des Wärmetauschers fließt kondensiertes Süßwasser ab.

Das System kann auch zur Energieerzeugung verwendet werden. Hierbei wird in den Metallrohren ein Wärmeträgermedium erhitzt und vorzugsweise in einen Wärmespeicher geleitet. Ein Stirlingsystem wird mit dem Wärmeträgermedium aus dem Wärmespeicher oder direkt aus dem Sonnenkollektor angetrieben.

Anstelle des Stirlingsystems kann auch eine Entsalzungseinrichtung in das System eingefügt werden kann. Die Entsalzungseinrichtung besteht aus einem Siedebecken, das durch den Durchlauf des Wärmeträgermediums aus dem Wärmespeicher erwärmt wird und in dem sich Salzwasser befindet, einem Süßwasser-Auffangbecken und einem gewölbten Deckel, an dem das kondensierte Wasser ablaufen kann.

Die mit der Erfindung erzielten Vorteile bestehen insbesondere darin, dass die Grundkomponenten der gleichen Anlage für mehrere Verfahren genutzt werden können. Weiterhin sind die verwendeten Grundkomponenten einfach aufgebaut und leicht montierbar.

Vorteilhafte Ausgestaltungen der Erfindung sind in den Unteransprüchen gegeben.

Ausführungsbeispiele der Erfindung sind im folgenden anhand von Zeichnungen näher erläutert.

In der Zeichnung zeigen:
Figur 1 einen schematischen Aufbau des Sonnenkollektors,
Figur 2 einen schematischen Aufbau des Rohrsystems,
Figur 3 einen schematischen Aufbau des Rohrsystems zur Verwendung als Entsalzungsanlage,
Figur 4 einen schematischen Aufbau der Anlage zur Verwendung als Stromerzeugungsanlage, und
Figur 5 einen schematischen Aufbau der Anlage zur Verwendung als Entsalzungsanlage.

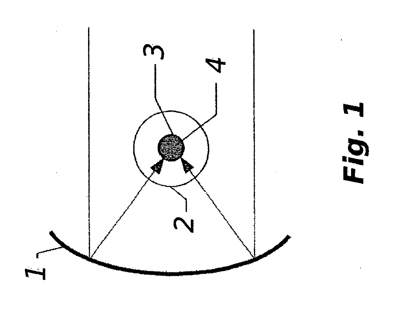

Figur 1 zeigt einen langgestreckten konkaven Sonnenreflektor 1, an dessen Brennlinie sich ein in einem Glasrohr 2 angeordnetes Metallrohr 3 befindet. Sonnenstrahlen werden an diesem Sonnenreflektor 1 reflektiert und auf das Glasrohr 2 gelenkt. Dadurch erwärmt sich ein Wärmeträgermedium 4, das sich in dem Metallrohr 3 befindet.

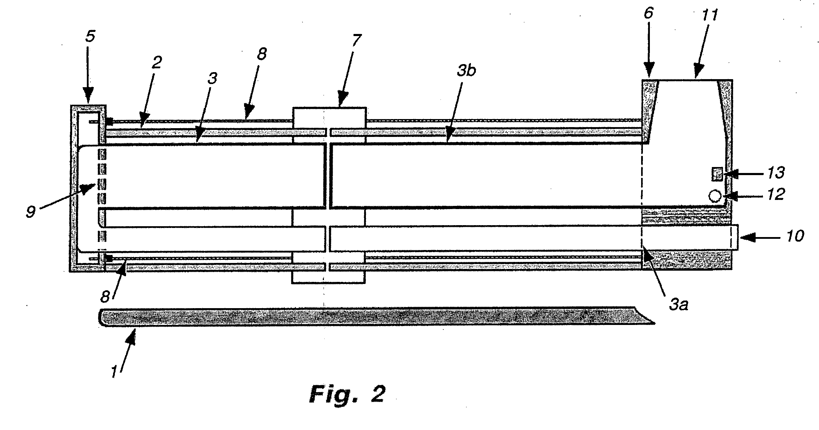

In Figur 2 ist ein Beispiel für den Aufbau der Solaranlage näher gezeigt. Innerhalb eines Glasrohres 2 ist ein Metallrohr 3 angeordnet, in welchem sich ein Wärmeträgermedium befindet. Das Metallrohr befindet sich an der Brennlinie eines langgestreckten konkaven Reflektors 1. Das Glasrohr 2 weist eine derartige Dicke auf, dass die Sonnenstrahlen in optimaler Weise durchgeleitet werden können und auf das Metallrohr (3) auftreffen, ohne dass sie reflektiert werden.

Sowohl das Glasrohr 2 als auch das Metallrohr 3 bestehen vorzugsweise aus jeweiligen Abschnitten, die zwischen zwei Endstücken 5, 6 angeordnet sind. Obwohl in Figur 2 nur zwei Rohrabschnitte gezeigt sind, kann zwischen diesen Endstücken 5, 6 eine beliebige Anzahl von Abschnitten von Glasrohren 2 bzw. Metallrohren 3 verwendet werden, die an ihren Verbindungsstellen gegeneinander abgedichtet sind und abgedichtet mit den jeweiligen Endstücken 5, 6 verbunden sind. Die Endstücke 5, 6 können entsprechend einer Vielzahl von Anwendungsmöglichkeiten ausgestaltet und durch Blindstopfen für einen speziellen Anwendungszweck angepasst werden. Beispiele hierfür werden nachfolgend entsprechend näher erläutert.

Die Abschnitte der Rohre werden durch eine Fixierung 7 verbunden, die die jeweiligen Rohrabschnitte nach außen gleichzeitig abdichtet. An den Endstücken 5, 6 sind Spannstäbe 8 befestigt, die auch durch die Fixierung 7 laufen und die Rohre stabilisieren. Das Metallrohr 3 besteht bevorzugt aus zwei Rohren, von von denen das erste 3a einen kleineren Durchmesser aufweist als das zweite 3b. Die beiden Metallrohre 3a, 3b sind parallel angeordnet. Das erste Endstück 5 kann einen Innenraum 9 aufweisen, der die beiden Metallrohre 3a, 3b miteinander verbindet. Das zweite Endstück 6 kann einen Zulauf 10 aufweisen, um ein Wärmeträgermedium in das erste kleinere Metallrohr 3a einzuführen. Des Weiteren kann das Endstück 6 einen Auslass 11 aufweisen, der mit dem zweiten größeren Metallrohr 3b verbunden ist. In diesem Endstück 6 kann sich weiterhin ein kleinerer Auslass 12 befinden. Ebenso befindet sich hier eine Aussparung 13, um eine Hilfseinrichtung einzusetzen. An den Zulauf 10 und den Auslass 11 des zweiten Endstücks 6 können verschiedene Vorrichtungen angefügt werden.

Mit diesem modularen System können verschiedene Anwendungen ausgeführt werden. Im Folgenden werden ohne Beschränkung hierauf die Wasserentsalzung und die Verwendung mit einem Stirlingmotor näher beschrieben.

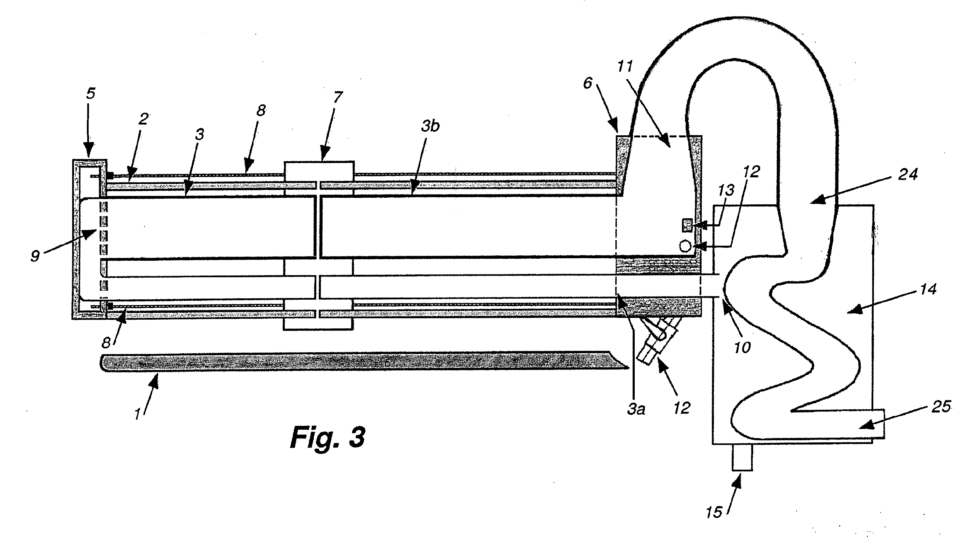

In Figur 3 ist die Anwendung des modularen Gesamtsystems zur Wasserentsalzung gezeigt. Hierbei sind das Glasrohr 2 und das Metallrohr 3 horizontal gelagert. Um Meerwasser bzw. Salzwasser einzuleiten, wird an den Zulauf 10 des zweiten Endstücks 6 ein Auslass eines ersten Kreislaufs eines Wärmetauschers 14 angeschlossen. In einen Zulauf (15) des ersten Kreislaufs des Wärmetauschers wird frisches kaltes Salzwasser eingeleitet und gelangt anschließend in das kleinere Metallrohr 3a. An den kleineren Auslass 12 des zweiten Endstücks 6 kann ein Auslass 12 befestigt werden, um Restsalzwasser abzulassen. An den größeren Auslass 11 kann ein Einlass 24 eines zweiten Kreislaufs des Wärmetauschers 14 angeschlossen werden. Das verdampfte Wasser wird dann aus dem Auslass 11 in den Einlass 24 gedrückt. Als Hilfseinrichtung kann zum Beispiel eine Vorrichtung in die Aussparung 13 eingesetzt werden, in die eine kleine Menge Öl geleitet wird, die dort erhitzt und anschließend wieder hinausgeleitet wird, um damit beispielsweise einen Motor einer Pumpe zur Zuführung des Salzwassers anzutreiben.

Im Folgenden wird das Erzeugen von Süßwasser beschrieben. Das Salzwasser wird durch den Zulauf 15 in den ersten Kreislauf des Wärmetauschers 14 geleitet und von diesem in das erste kleinere Metallrohr 3a. In diesem ersten Metallrohr 3a wird das Salzwasser durch die Sonneneinstrahlung vorgewärmt. Am Ende des Rohres wird das Salzwasser durch den Innenraum 9 in das zweite größere Metallrohr 3b geleitet. Der Druck des Salzwassers ist so bemessen, dass das Metallrohr 3b zur Hälfte gefüllt ist. Auf diese Weise wird eine optimale Verdampfungsfläche erreicht. In dem Metallrohr 3b wird das Salzwasser mit Hilfe der Sonnenenergie soweit erhitzt, dass es verdampft. Anschließend wird dieser Dampf in den Einlass 24 des zweiten Kreislauf des Wärmetauschers 14 gedrückt. Durch die zwei Kreisläufe des Wärmetauschers 14 wird der Dampf kondensiert. Gleichzeitig wird das kalte Wasser des ersten Kreislaufs bereits etwas vorgewärmt. Aus dem Auslass 25 des zweiten Kreislaufs des Wärmetauschers 14 fließt kondensiertes Süßwasser ab. Das Restsalzwasser kann über den Auslass 12 abgeleitet werden und kann gereinigt und als Speisesalz verwendet werden.

Ein weiteres Beispiel ist die Verwendung des Solarsystems mit einer Dampfmaschine. Hierbei kann an den größeren Auslass 11 des zweiten Endstücks 6 eine Dampfmaschine angeschlossen werden.

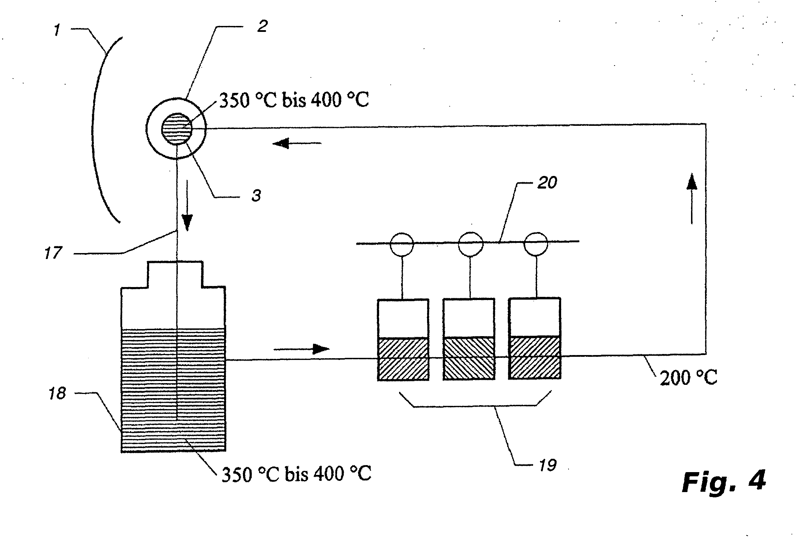

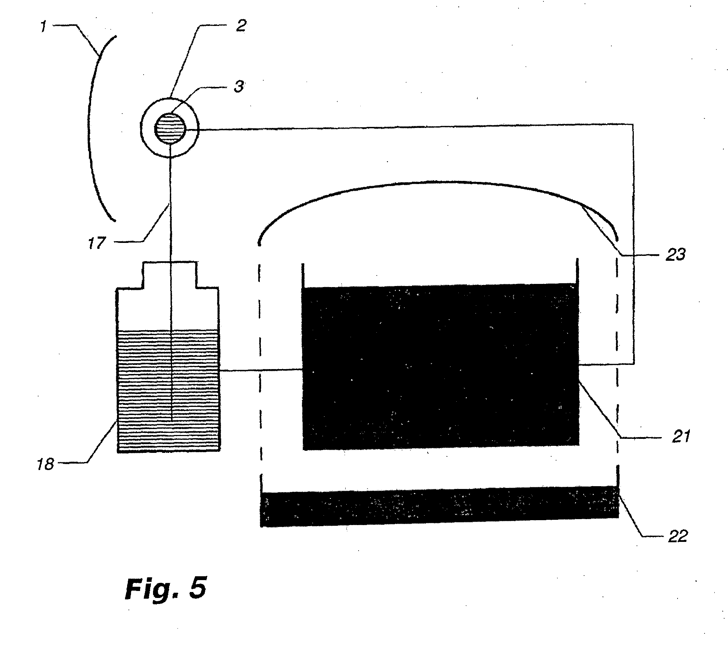

Die Längsachsen des Metallrohres bzw. des Reflektors der Rohrsysteme in den Figuren 4 und 5 können sowohl horizontal als auch vertikal oder in einem anderen Winkel angeordnet werden.

Figur 4 zeigt ein mögliches System zur Energieerzeugung. Hier wird in den Rohren ein Wärmeträgermedium erhitzt. Über Leitungen 17, die an den Auslass 11 des zweiten Endstücks 6 angeschlossen sind, wird das Wärmeträgermedium vorzugsweise in einen Wärmespeicher 18 geleitet. Der Wärmespeicher 18 kann ebenfalls mit einem Wärmeträgermedium gefüllt sein. Ein Stirlingsystem 19 wird über eine Leitung mit dem Wärmeträgermedium aus dem Wärmespeicher 18 oder direkt aus dem Sonnenkollektor angetrieben. Dieses Stirlingsystem 19 treibt wiederum eine Antriebswelle 20 an. Die Temperatur des Wärmeträgermediums vor dem Stirlingsystem beträgt 350° C bis 400° C, nach dem Stirlingsystem 200° C. Das Wärmeträgermedium wird über eine Rücklaufleitung anschließend in den Einlass 10 des zweiten Endstücks 6 und damit wieder zurück in das Rohrsystem geleitet.

Das erste kleinere Metallrohr 3a kann entfallen. Als Wärmeträgermedium wird hier bevorzugt Öl verwendet.

In Figur 5 ist gezeigt, wie anstelle des Stirlingsystems eine Entsalzungseinrichtung in das System eingefügt werden kann. Die Entsalzungseinrichtung besteht aus einem Siedebecken 21, in dem sich Salzwasser befindet, einem Süßwasser-Auffangbecken 22 und einem gewölbten Deckel 23, an dem das kondensierte Wasser ablaufen kann. Das Siedebecken 21 wird durch einen Wärmetauscher, der durch das Siedebecken führt und in dem sich das Wärmeträgermedium aus den Leitungen befindet, erhitzt. Das Salzwasser verdampft, wobei das Salz in dem Siedebecken 21 verbleibt und der Dampf nur aus Süßwasser besteht. Dieser Dampf steigt nach oben und kondensiert an dem Deckel 23. Durch dessen Wölbung läuft das kondensierte Wasser außerhalb des Siedebeckens 21 ab und sammelt sich in dem Süßwasser-Auffangbecken 22.

In den Rohren wird, wie in Figur 4 beschrieben, ein Wärmeträgermedium erhitzt. Über Leitungen 17, die an den Auslass 11 des zweiten Endstücks 6 angeschlossen sind, wird das Wärmeträgermedium vorzugsweise in einen Wärmespeicher 18 geleitet. Der Wärmespeicher 18 kann ebenfalls mit einem Wärmeträgermedium gefüllt sein. Der Wärmetauscher wird über eine Leitung mit dem Wärmeträgermedium aus dem Wärmespeicher 18 oder direkt aus dem Sonnenkollektor angetrieben. Das Wärmeträgermedium wird über eine Rücklaufleitung anschließend in den Einlass 10 des zweiten Endstücks 6 und damit wieder zurück in das Rohrsystem geleitet.

Ebenso wie in Figur 4 kann auch hier das erste kleinere Metallrohr 3a entfallen. Als Wärmeträgermedium kann hier ebenfalls Öl verwendet werden.

## Patentansprüche

1. Solaranlage mit einem langgestreckten konkaven Sonnenreflektor (1), wobei die Solaranlage ein Glasrohr (2) und zumindest ein darin angeordnetes Metallrohr (3) aufweist, und das Metallrohr ein Wärmeträgermedium enthält,
**dadurch gekennzeichnet, dass**
die Solaranlage modular aufgebaut ist, wobei sowohl das Glasrohr (2) als auch das Metallrohr (3) aus jeweiligen in Längsrichtung hintereinander angeordneten Abschnitten bestehen, die zwischen zwei Endstücken (5, 6) angeordnet sind, und
dass zwischen den Endstücken Spannstäbe (8) angebracht sind, um die Rohre zu versteifen.

2. Solaranlage nach Anspruch 1, **dadurch gekennzeichnet, dass** die Endstücke (5, 6) Öffnungen zur Aufnahme des Metallrohres (3) aufweisen.

3. Solaranlage nach Anspruch 1 oder 2, **dadurch gekennzeichnet, dass** die Rohre (2, 3) durch eine Fixierung (7) verbunden werden, durch die die Spannstäbe (8) hindurchlaufen, um eine Abdichtung der Enden der Abschnitte der Rohre gegeneinander und eine Fixierung der Rohre (2, 3) und der Spannstäbe (8) relativ zueinander in Querrichtung der Rohre (2, 3) zu bewirken.

4. Solaranlage nach einem der vorhergehenden Ansprüche, **dadurch gekennzeichnet, dass** das zumindest eine Metallrohr aus zwei Metallrohren (3a, 3b) besteht, die parallel zueinander im Inneren des Glasrohres (3) angeordnet sind, und von denen das erste (3a) einen kleineren Durchmesser aufweist als das zweite (3b).

5. Solaranlage nach einem der vorhergehenden Ansprüche, **dadurch gekennzeichnet, dass** das erste Endstück (5) einen Innenraum (9) aufweist, der das erste Metallrohr (3a) mit dem zweiten Metallrohr (3b) verbindet.

6. Solaranlage nach einem der vorhergehenden Ansprüche, **dadurch gekennzeichnet, dass** das zweite Endstück (6) einen Einlass (10) aufweist, um ein Wärmeträgermedium in das erste kleinere Metallrohr (3a) einzuleiten.

7. Solaranlage nach einem der vorhergehenden Ansprüche, **dadurch gekennzeichnet, dass** das zweite Endstück (6) einen Auslass (11) aufweist, der mit dem zweiten größeren Metallrohr (3b) verbunden ist.

8. Solaranlage nach einem der vorhergehenden Ansprüche, **dadurch gekennzeichnet, dass** das zweite Endstück (6) einen kleineren Auslass (12) aufweist.

9. Solaranlage nach einem der vorhergehenden Ansprüche, **dadurch gekennzeichnet, dass** das zweite Endstück (6) eine Aussparung (13) zum Anschluss einer Hilfseinrichtung aufweist.

10. Solaranlage zur Verwendung als Entsalzungsanlage nach einem der vorhergehenden Ansprüche, **dadurch gekennzeichnet, dass** die Rohre (2, 3) horizontal ausgerichtet sind.

11. Solaranlage zur Verwendung als Entsalzungsanlage nach Anspruch 10, **dadurch gekennzeichnet, dass** an den Einlass (10) des zweiten Endstücks (6) der Auslass eines ersten Kreislaufs eines Wärmetauschers (14) angeschlossen ist, in dessen einen Einlass (15) Salzwasser eingeleitet werden kann.

12. Solaranlage zur Verwendung als Entsalzungsanlage nach Anspruch 11, **dadurch gekennzeichnet, dass** der Einlass (24) eines zweiten Kreislaufs des Wärmetauschers (14) an den größeren Auslass (11) des zweiten Endstücks (6) angeschlossen wird, und dass der Auslass (25) des zweiten Kreislaufs einen Auslass für Süßwasser bildet.

13. Solaranlage zur Verwendung als Entsalzungsanlage nach einem der vorhergehenden Ansprüche, **dadurch gekennzeichnet, dass** Salzwasser in einer derartigen Menge eingeleitet wird, dass das größere Metallrohr (3b) zur Hälfte gefüllt ist.

14. Solaranlage zur Verwendung als Entsalzungsanlage nach einem der Ansprüche 10 bis 13, **dadurch gekennzeichnet, dass** an den kleineren Auslass (12) des zweiten Endstücks (6) ein Auslass (12) angeschlossen wird, um Restsalzwasser abzulassen.

15. Solaranlage zur Verwendung als Entsalzungsanlage nach einem der Ansprüche 10 bis 14, **dadurch gekennzeichnet, dass** in die Aussparung (13) des zweiten Endstücks (6) eine Vorrichtung zur Erhitzung von Öl als Wärmeträger zur Energieerzeugung für Hilfseinrichtungen der Solaranlage eingesetzt ist.

16. Solaranlage nach einem der Ansprüche 1 bis 9 zur Erzeugung von Dampf, **dadurch gekennzeichnet, dass** an den größeren Auslass (11) des zweiten Endstücks (6) eine Wärmekraftmaschine angeschlossen wird und die Verdampfung im größeren Metallrohr (3b) geschieht.

17. Solaranlage nach einem der Ansprüche 1 bis 9, **dadurch gekennzeichnet, dass** an den Zulauf (10) des ersten kleineren Metallrohres (3a) eine Rücklaufleitung angeschlossen wird und an den größeren Auslass (11) des zweiten Endstücks (6) Leitungen (17) angeschlossen werden, die mit einem Wärmespeicher (18) verbunden werden, und dass in die Rücklaufleitung eine Stirlingmaschine oder eine Entsalzungsanlage eingefügt werden können.

18. Solaranlage zur Verwendung mit einer Stirlingmaschine nach Anspruch 17, **dadurch gekennzeichnet, dass** ein Stirlingmotor (19) mit dem Wärmeträgermedium aus dem Wärmespeicher (18) oder direkt aus dem Sonnenkollektor betrieben wird.

19. Solaranlage zur Verwendung mit einer Stirlingmaschine nach einem der Ansprüche 17 bis 18, **dadurch gekennzeichnet, dass** das Wärmeträgermedium Öl ist.

20. Solaranlage zur Verwendung mit einer Entsalzungsanlage nach Anspruch 17, **dadurch gekennzeichnet, dass** ein Siedebecken (21) mit Salzwasser durch das Wärmeträgermedium aus dem Speicher (18) oder direkt aus dem Sonnenkollektor erhitzt wird.

21. Solaranlage zur Verwendung mit einer Entsalzungsanlage nach Anspruch 20, **dadurch gekennzeichnet, dass** eine gekühlte Abdeckung (23) über dem Siedebecken (21) angeordnet ist.

22. Solaranlage zur Verwendung mit einer Entsalzungsanlage nach einem der Ansprüche 20 bis 21, **dadurch gekennzeichnet, dass** ein Süßwasser-Auffangbecken (22) unterhalb des Siedebeckens (21) angeordnet ist und einen größeren Umfang aufweist als dieses.
